# EUROPÄISCHE PATENTSCHRIFT

(11) **EP 2 140 663 B1**
(45) Veröffentlichungstag und Bekanntmachung des Hinweises auf die Patenterteilung: **27.06.2012**
(21) Anmeldenummer: 07723307.0
(22) Anmeldetag: 16.03.2007
(51) Int. Cl.: H04L 29/08, H04L 12/24

(54) **VERFAHREN UND ENDGERÄT ZUR KONFIGURIERUNG EINES ENDGERÄTES**
METHOD AND TERMINAL FOR CONFIGURING A TERMINAL
PROCÉDÉ ET TERMINAL POUR LA CONFIGURATION D'UN TERMINAL

(43) Veröffentlichungstag der Anmeldung: 06.01.2010
(73) Patentinhaber: Gigaset Communications GmbH, 81379 München (DE)
(72) Erfinder: CARRILLO, Luis, 46399 Bocholt (DE); KRUK, Anton, 46499 Hamminkeln (DE)
(74) Vertreter: Michalski Hüttermann & Partner
(86) Internationale Anmeldenummer: PCT/EP2007/002326
(87) Internationale Veröffentlichungsnummer: WO 2008/113370

(56) Entgegenhaltungen:
- WO-A-2004/091173
- US-A1- 2005 153 683
- PETRIE PINGTEL CORP DRAFT-PETRIE-SIP-CONFIG-FRAMEWORK-01 TXT D: "A Framework for SIP User Agent Configuration ; draft-petrie-sip-config-framework-01.txt" IETF STANDARD-WORKING-DRAFT, INTERNET ENGINEERING TASK FORCE, IETF, CH, Nr. 1, November 2001 (2001-11), XP015004838 ISSN: 0000-0004

## Beschreibung

Die Erfindung betrifft ein Verfahren zur Konfigurierung eines Endgerätes gemäß Patentanspruch 1, ein Endgerät gemäß Patentanspruch 12 und einen Adress-Server gemäß Patentanspruch 13.

Moderne digitale Endgeräte müssen häufig zumindest vor ihrem ersten Einsatz in einem Kommunikationsnetzwerk mit Konfigurationsdaten ausgestattet (konfiguriert) werden, um einen bestimmungsgemäßen Gebrauch in diesem Kommunikationsnetzwerk zu gewährleisten. Während in "klassischen" leitungsvermittelten Kommunikationsnetzwerken ein Endgerät auch ohne vorherige Konfigurierung unmittelbar nach dem Anschluss an einem "Port" einer Kommunikationsanlage oder eines öffentlichen Vermittlungssystems zumindest grundlegend betriebsbereit war, müssen insbesondere schnurlose, funkbasierte oder paketvermittelt betriebene (so genannte VoIP-Endgeräte; VoIP = Voice-over-Internet-Protocol) zwangsläufig mit Konfigurationsdaten versehen werden, welche zum einen eine Identifizierung des Nutzers (N1, N2) zulassen, und zum anderen denjenigen Netzknoten angeben, über den Kommunikationsverbindungen durchzuführen sind. Im Falle von GSM-Mobiltelefonen ("Handy") werden diese Konfigurations-Daten in das Endgerät eingegeben, indem eine sogenannte SIM-Karte (SIM = Subscriber Identification Module) in das Gerät eingesetzt wird. Auf dieser SIM-Karte sind dann die Konfigurations-Daten gespeichert, die von dem Endgerät zur Kontaktierung einer Mobilfunk-Basisstation des zugeordneten Providers verwendet werden.

Auch schnurlose Telefone, beispielsweise DECT-Endgeräte (DECT = Digital Enhanced Cordless Telephony) müssen sich gegenüber einer DECT-Basisstation identifizieren, um Zugang zur Kommunikationsverbindungen und Netzdiensten zu erhalten. Sofern die Geräte noch nicht herstellerseitig miteinander logisch verbunden sind, muss das "pairing" durch den Nutzer (N1, N2) durchgeführt werden, beispielsweise durch Eingabe eines Stations-Codes in das Endgerät.

Auch bei den VoIP-Endgeräten, also in der Internet-Telefonie, muss ein Endgerät, gleichgültig ob es sich um ein gegenständliches "IP-Phone" oder eine entsprechend eingerichtete Computer-Hardware handelt, mit Konfigurations-Daten versehen werden. So muss beispielsweise der Netzknoten eines Providers, also z.B. ein H.323-Gatekeeper oder ein SIP-Proxy-Server, samt dessen Netzwerkadresse in dem Endgerät konfiguriert werden, damit eine Kommunikationsverbindung aufgebaut werden kann. Weiter müssen in dem Gerät auch ein Benutzername und ein Kennwort eingespeichert (administriert) werden, damit der zugeordnete Nutzer von der Netzknoteneinrichtung identifiziert werden kann. Gerade im letztgenannten Beispiel der "Internet-Telefonie" müssen je nach verwendetem Kommunikationsprotokoll noch weitere "technische Daten" in das Endgerät eingegeben werden, beispielsweise über zu verwendende Sprach-Codecs, Adressen von Adressverzeichnis-Servern (z.B. DNS-Server, Directory-Server o.ä.), etc..

Beim Betrieb solcher digitaler Endgeräte hat sich als nachteilig erwiesen, dass gerade in den Fällen, in denen ein technischer Laie ein solches Endgerät in Betrieb nehmen möchte, eine Konfiguration mit den richtigen Daten oft lästig und fehlerbehaftet ist.

Um diese Nachteile zu umgehen, stellen viele Netzbetreiber ("Provider") ihren Kunden bereits fertig vorkonfigurierte Endgeräte zur Verfügung, die vom Kunden durch bloßes Anschließen an ihr Daten-Netzwerk (z.B. DSL-Modem bzw. -Router) und durch Vorsehen einer Stromversorgung in Betrieb genommen werden können. Die Bereitstellung solcher kundenspezifisch vorkonfigurierter Geräte ist jedoch mit einem hohen logistischen Aufwand verbunden. Aus diesem Grund haben sich auch Lösungen etabliert, bei denen Endgeräte den Kunden zur Verfügung gestellt werden, die bereits auf einen bestimmten Provider voreingestellt sind, d.h., dass in diesen Geräten die allgemein für den bestimmten Provider gültigen Konfigurations-Daten voreingestellt sind. In diesen Fällen gibt der Kunde dann einen von seinem Provider für ihn zur Verfügung gestellten Benutzernamen bzw. eine Benutzerkennung und gegebenenfalls ein Kennwort (z.B. eine PIN) ein, wonach das Endgerät gemäß der voreingestellten Konfigurations-Daten eine Verbindung zu einem Server des Providers aufbaut und dort sich selbst und den Nutzer anmeldet.

Obwohl das vorgenannte Verfahren bereits einen hohen Nutzungskomfort bietet, ist es mit dem Nachteil behaftet, dass ein Hersteller für digitale Endgeräte, der unterschiedliche Provider beliefert, für jeden dieser Provider eine eigene Produktvariante des Endgeräts vorsehen muss, in der die jeweils gültigen grundlegenden Konfigurations-Daten des jeweiligen Providers bereits eingestellt sind. Außerdem muss bei einer solchen Vorgehensweise sichergestellt werden, dass zum Verkaufszeitpunkt bzw. zum Inbetriebnahme-Zeitpunkt des Endgerätes die vorab eingespeicherten grundlegenden Konfigurations-Daten noch aktuell und vollständig sind.

US 2005/0153683 A1 offenbart ein Verfahren zur "plug and play" Konfiguration von Endgeräten, welche Datenprotokolledienste verarbeiten können, bei welchem ein Internet-Protokoll Backbone Netzwerk eines Servicedienstleisters über ein Netzwerk kontaktiert wird, welches von dem Serviceprovider bereitgestellt wird. Hierbei soll ein gesicherter Zugriff auf das Internet-Protokoll Backbone Netzwerk sichergestellt werden.

WO 2004/091173 A1 offenbart ein Verfahren und eine Anordnung zur Konfiguration einer Einrichtung in einem Netzwerk, bei welchem zur Konfiguration einer Einrichtung in einem Datennetz zuerst in die Einrichtung ein Domänen-Name eingespeichert wird. Danach überträgt die Einrichtung eine Abfragenachricht, die den Domänen-Namen umfasst, zu einem Adressierungs-Server, der der Umsetzung zwischen Domänen-Name und den diesen zugehörigen Internet-Adressen dient.

Es ist also eine Aufgabe der vorliegenden Erfindung, ein zuverlässiges, logistisch einfaches und kundenfreundliches Verfahren und ebensolche Geräte (Endgeräte, Server) zur Konfigurierung von Endgeräten vorzuschlagen.

Diese Aufgabe wird durch ein Verfahren gemäß Patentanspruch 1, sowie ein Endgerät gemäß Patentanspruch 11 gelöst.

Zur Lösung der Aufgabe wird ein Verfahren zur Konfigurierung eines Endgerätes vorgeschlagen, bei dem für die Konfigurierung der nutzer- und/oder providerbezogenen Konfigurationsdaten durch den Nutzer zuerst ein durch seinen Provider für ihn zur Verfügung gestellter Authentisierungscode in das Endgerät eingegeben wird. Der Authentisierungscode ist derart ausgestaltet, dass aus ihm auf denjenigen Provider geschlossen werden kann, der diesen Authentisierungscode erzeugt bzw. zur Verfügung gestellt hat. Diese Information wird von dem Endgerät zur Kontaktierung eines Konfigurierungs-Servers des Providers verwendet, wobei der Authentisierungscode oder zumindest ein den Nutzer identifizierender Teilbereich des Authentisierungscodes zu diesem Konfigurierungs-Server übertragen wird, wobei dieser dann anhand der empfangenen Daten die Konfigurationsdaten bereitstellt und zu dem Endgerät übermittelt, wonach das Endgerät sich selbst anhand dieser Konfigurations-Daten konfiguriert. Durch die Anwendung eines solchen Verfahrens braucht ein Kunde zur Inbetriebnahme seines neuen Endgerätes lediglich den von "seinem" Provider zur Verfügung gestellten Authentisierungscode eingeben. Da die eigentlichen Konfigurationsdaten erst zum Zeitpunkt der Inbetriebnahme von dem Konfigurierungs-Server geladen werden, kann das Endgerät immer mit stets aktuellen Konfigurationsdaten versorgt werden, so dass diese Daten auch (netzseitig) noch nach dem Produktionszeitraum des Endgerätes geändert werden können.

Die Lösung der Aufgabe sieht weiter den Einsatz eines Endgerätes für eine Kommunikationsanordnung in einem paketvermittelten Netzwerk vor, wobei das Endgerät derart eingerichtet ist, dass es zunächst eine Benutzeroberfläche zur Eingabe eines Authentisierungscodes anzeigt. Das Endgerät weist weiter eine Übermittlungseinrichtung zur Übertragung zumindest eines Teilbereiches des Authentisierungscodes zu einem Adress-Server auf, und eine Empfangseinrichtung zum Empfang einer Adresse eines Konfigurierungs-Servers von dem Adress-Server. Weiter umfasst das Endgerät eine weitere oder dieselbe Übertragungseinrichtung zur Übertragung des Authentisierungscodes oder zumindest eines den Nutzer identifizierenden Teilbereiches des Authentisierungscodes zu dem Konfigurierungs-Server, eine Empfangseinrichtung zum Empfangen von durch den Konfigurierungs-Server bereitgestellten Konfigurationsdaten, und eine Einrichtung zur Anwendung der Konfigurationsdaten auf das Endgerät. Ein solches Endgerät kann vorteilhaft in einem Großserien-Fertigungsprozess "auf Vorrat" hergestellt werden, weil lediglich die (eine) Adresse des Adress-Servers in diesem Endgerät herstellerseitig vorkonfiguriert werden muss. Selbst wenn nach dem Herstellungs-Zeitpunkt ein neuer, weiterer Provider dieses Endgerät in sein Sortiment aufnimmt, brauchen nicht alle bereits gefertigte Endgeräte nachkonfiguriert werden, sondern es reicht, einen weiteren providerbezogenen Eintrag in eine Zuordnungstabelle des Adress-Servers einzufügen. Dabei ist es ausreichend, wenn ein solcher Eintrag eine Verknüpfung zwischen einer Providerkennung für einen Authentisierungscode und einer Netzwerkadresse (URL) eines Konfigurierungs-Servers des Providers umfasst.

Weiter sieht die Lösung der Aufgabe den Einsatz eines Adress-Servers für ein paketvermitteltes Kommunikationsnetzwerk vor, der zum Datenaustausch mit einem Endgerät eingerichtet ist und der eine Zugriffseinrichtung für eine Datenbank umfasst, wobei die Zugriffseinrichtung zusammen mit der Datenbank zur Identifizierung eines Providers anhand des empfangenen Authentisierungscodes bzw. anhand eines Teilbereichs des Authentisierungscodes eingerichtet ist und zur Ermittlung der Adresse eines Konfigurierungs-Servers des ermittelten Providers, wobei diese Adresse dem abrufenden Endgerät zur Verfügung gestellt werden kann. In einer einfachen Ausführungsform ist die Datenbank ein Bestandteil des Adress-Servers. Durch den Einsatz eines solchen Adress-Servers erlangt ein Endgerät Zugriff auf eine beliebige Anzahl von Konfigurierungs-Servern der unterschiedlichsten Provider, ohne dass die Netzwerkadressen dieser (zahlreichen) Konfigurierungs-Server zuvor in dem Endgerät administriert werden müssen. Ein weiterer Vorteil besteht darin, dass vermieden wird, dass ein Nutzer irrtümlich versucht, sein Endgerät bei einem Server eines nichtgewünschten Providers anzumelden, weil durch den Authentisierungscode der Adress-Server in die Lage versetzt wird, einen (oder mehrere) passenden Konfigurierungs-Server vorzugeben.

Vorteilhafte Ausgestaltungen des Verfahrens sind in den abhängigen Patentansprüchen angegeben. Die dabei beschriebenen Merkmale und Vorteile gelten sinngemäß auch für das erfindungsgemäße Endgerät und den erfindungsgemäßen Adress-Server.

Dabei ist für das Verfahren wesentlich, wenn in dem zweiten Schritt zur Identifizierung der Adresse durch das Endgerät zumindest ein Teilbereich des Authentisierungscodes zu einem Adress-Server übertragen wird, wonach durch den Adress-Server eine oder die Adresse des Konfigurierungs-Servers bereitgestellt und zu dem Endgerät übertragen wird. Dadurch wird sichergestellt, dass das Endgerät zum Zeitpunkt der Anmeldung (Konfigurierung) die aktuelle Netzwerk-Adresse eines Konfigurierungs-Servers des korrekten Providers verwendet. Natürlich kann ein Provider auch mehrere Konfigurierungs-Server betreiben und umgekehrt können auch mehrere Provider einen gemeinsamen Konfigurierungs-Server verwenden.

Eine einfache Auswertung des Authentisierungscodes ist möglich, wenn für eine Identifizierung des Providers dafür reservierte Stellen in dem Authentisierungscode oder eine Abkürzung des Provider-Namens verwendet werden.

Eine einfache Bedienung auch für technische Laien ergibt sich, wenn in dem ersten Schritt durch das Endgerät mittels einer Benutzeroberfläche eine Eingabe-Aufforderung zur Eingabe des Authentisierungscodes ausgegeben wird. Insbesondere in den Fällen, in denen in dem Endgerät noch keine Konfigurierungsdaten vorliegen oder eine Kommunikation anhand der vorliegenden Konfigurationsdaten nicht oder nicht mehr möglich ist, ist es von Vorteil, wenn die Eingabeaufforderung automatisch ausgegeben wird.

Das Verfahren wird besonders vorteilhaft in einem paketvermittelten Netzwerk, beispielsweise einem Intranet oder im Internet, betrieben. In solchen Fällen wird praktischerweise als die Adresse des Konfigurierungs-Servers eine URL verwendet.

Im zweiten Schritt können durch den Adress-Server auch zusätzliche Konfigurierungsdaten (Zusatzkonfigurierungsdaten) an das Endgerät gesendet und zur weiteren Konfigurierung des Endgerätes angewendet werden, wobei durch die zusätzlichen Konfigurierungsdaten beispielsweise ein Firmware-Update, ein Zusatzprogramm und/oder Kundeninformationen zu dem Endgerät übertragen werden können.

Aus Sicherheitsgründen kann das Endgerät bei der Durchführung des Verfahrens vor oder während des Abbruchs der Konfigurationsdaten eine Eingabeaufforderung zur Eingabe einer PIN oder eines Kennwortes ausgeben, wobei diese PIN oder das Kennwort im dritten Schritt als ein Berechtigungsnachweis für den Abruf der Konfigurationsdaten an den Konfigurierungs-Server gesendet wird. Alternativ kann die Eingabe einer korrekten PIN bzw. eines korrekten Kennwortes auch die Vorraussetzung dafür darstellen, dass bereits empfangene Konfigurationsdaten auf das Endgerät angewendet werden. Eine solche PIN bzw. ein solches Kennwort kann einem Kunden aus Sicherheitsgründen getrennt von dem Authentisierungscode zugestellt werden. Die PIN kann aber auch im Authentisierungscode integriert sein, so dass die getrennte Bereitstellung und Eingabe einer PIN entfallen kann.

Vorteilhafter Weise übermittelt das Endgerät beim Abruf der Konfigurationsdaten Informationen über seine eigene Hardware- und/oder Software-Konfiguration und/oder eine Standortinformation zu dem Konfigurierungs-Server, so dass abgestimmt auf das jeweilige Endgerät angepasste Konfigurationsdaten bereitgestellt und auf das Endgerät angewendet werden können. Solche Hardware- und/oder Software-Informationen bzw. eine Standort-Information können von dem Endgerät auch an den Adress-Server übermittelt werden, um von diesem spezifische zusätzliche Konfigurierungsdaten (Zusatzkonfigurierungsdaten) zu beziehen.

Die Konfigurationsdaten und gegebenenfalls die zusätzlichen Konfigurierungsdaten werden zumindest teilweise vorteilhaft zur Konfigurierung des Endgerätes für eine Voice-over-IP-Kommunikationsanordnung verwendet.

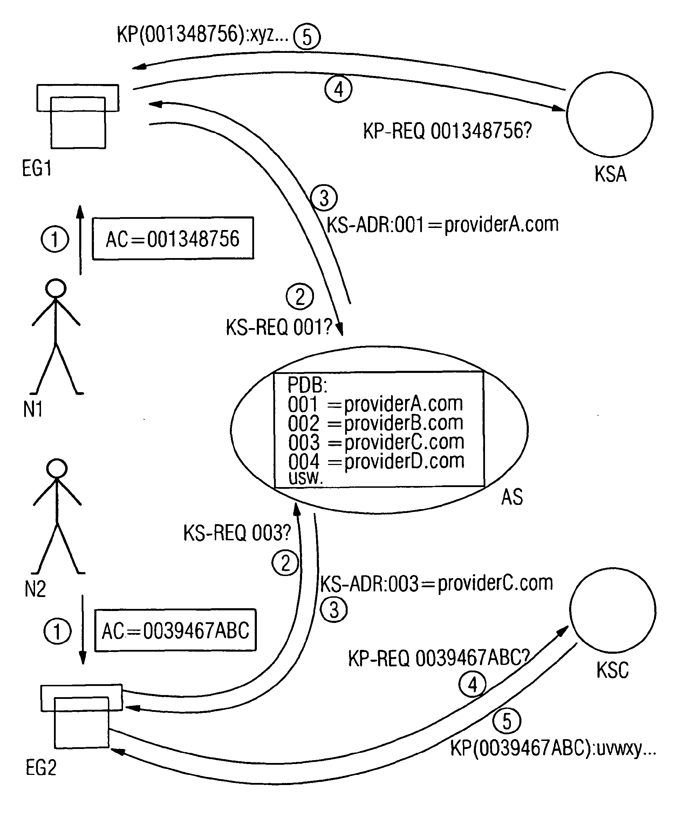

Ein Ausführungsbeispiel für das erfindungsgemäße Verfahren wird nachfolgend anhand der Zeichnung erläutert. Es dient gleichzeitig der Erläuterung eines erfindungsgemäßen Endgerätes und eines erfindungsgemäßen Adress-Servers.

Dabei zeigt die einzige Figur in schematischer Darstellung eine Anordnung aus zwei Nutzern, zwei Endgeräten, zwei Konfigurierungs-Servern und einem Adress-Server, wobei der Datenverkehr einzelner Verfahrensschritte mit Hilfe von Pfeilen visualisiert ist.

In der Figur sind schematisch zwei Endgeräte EG1, EG2 mit ihren zugehörigen Nutzern N1, N2 dargestellt. Bei den Endgeräten EG1, EG2 handelt es sich VoIP-Telefone, die über ein (nicht dargestelltes) Datennetzwerk, beispielsweise ein schnurloses WLAN-Netz, mit einem öffentlichen Kommunikationsnetzwerk (hier: das Internet) verbunden sind. Selbstverständlich ist das hier beschriebene Verfahren nicht auf solche Endgeräte beschränkt. Weiter sind in der Figur zwei Konfigurierungs-Server KSA, KSC der Provider "providerA", "providerC" sowie ein Adress-Server AS dargestellt. Zwischen den dargestellten Endgeräten EG1, EG2 und den gezeigten Servern KSA, KSC, AS sind Pfeile eingezeichnet, die einen Informationsfluss jeweils visualisieren sollen und die jeweils mit einer Zahl zwischen 1 und 5 beschriftet sind. Die Zahlen zwischen 1 und 5 geben in aufsteigender Folge eine Reihenfolge des Informationsflusses vor; diese Zahlen entsprechen nicht genau den in den Patentansprüchen aufgelisteten Verfahrensschritten. Im Folgenden wird das erfindungsgemäße Verfahren für zwei verschiedene Nutzer N1, N2 und damit für zwei verschiedene Endgeräte EG1, EG2 beschrieben, wobei bei den jeweils äquivalenten Verfahrensschritten bzw. Informations-Übertragungen die Pfeile jeweils mit einer identischen Bezeichnung (Zahlen zwischen 1 und 5) versehen sind.

Der Nutzer N1 erhält vor Beginn des Inbetriebnahme-Verfahrens von einem Provider, mit dem er einen Dienstleistungsvertrag für Telekommunikations-Dienstleistungen abgeschlossen hat, einen persönlichen Authentisierungscode und eine "Geheimzahl" (eine sogenannte PIN) mitgeteilt. Gleichzeitig erwirbt der Nutzer N1 ein Telefon, nämlich das Endgerät EG1, und schließt es an seinem Kommunikationsnetzwerk (hier: an seinen DSL-Router) an. Das Endgerät EG 1 stellt bei seinem Start ("Booten") fest, dass es sich im Auslieferungszustand befindet und zeigt daher auf eine Anzeigevorrichtung (Display) eine Aufforderung zur Eingabe eines Authentisierungscodes und einer PIN an; die PIN-Eingabe kann optional auch entfallen.

Über das Netzwerk und somit über das Internet baut das Endgerät EG1 nun eine Verbindung zu dem Adress-Server AS auf. Die Netzwerkadresse (IP-Adresse oder URL) des Adress-Servers ist dazu herstellerseitig in das Endgerät EG1 einprogrammiert worden. Im vorliegenden Fall wird der Adress-Server AS sogar von dem Hersteller des Endgerätes EG1 betrieben bzw. zur Verfügung gestellt. Im Rahmen dieser Verbindung übermittelt das Endgerät EG1 zu dem Adress-Server AS eine Abfragenachricht "KS-REQ001?", wobei die Ziffernfolge "001" ein Teilbereich des Authentisierungscodes "001348756" (genauer: die ersten drei Stellen) sind.

Alternativ können mit der Abfragenachricht auch weitere Informationen oder der komplette Authentisierungscode zu dem Adress-Server AS übermittelt werden. Weiter ist auch denkbar, dass das Endgerät zuvor von dem Nutzer N1 eine Standortinformation abfragt und diese Information zusätzlich zu dem Adress-Server AS übermittelt.

Die übermittelte Ziffernfolge "001" ist eine zwischen dem Provider und dem Betreiber des Adress-Servers AS vereinbarte Ziffernfolge, die Auskunft darüber gibt, dass der Authentisierungscode AC durch den Provider "providerA" zur Verfügung gestellt wurde. Anhand einer Datenbank, die im vorliegenden Ausführungsbeispiel Bestandteil des Adress-Servers AS ist, erlangt dieser die Information, dass der mit der Ziffernfolge "001" bezeichnete Provider einen Konfigurierungs-Server KSA betreibt, der die Netzwerkadresse (URL) "providerA.com" aufweist. Der Adress-Server AS übermittelt diese Information mit einer Antwortnachricht "KS-ADR:001=providerA.com" zu dem Endgerät EG1, wo diese Information zwischengespeichert wird.

Das Endgerät EG1 generiert nun eine weitere Abfragenachricht "KP-REQ001348756?" und übermittelt diese an die zuvor ermittelte URL, nämlich an die URL "providerA.com", wodurch diese Abfragenachricht zu dem Konfigurierungs-Server KSA übertragen wird. In dem Konfigurierungs-Server KSA wird nun in einer weiteren Datenbank ermittelt, ob der gerade mittels der Abfragenachricht empfangene Authentisierungscode "001348756" gültig ist und stellt danach fest, welche Parameter dem Nutzer N1 mit diesem Authentisierungscode AC zur Verfügung gestellt werden sollen. Diese Daten werden nun als ein Konfigurierungs-Datensatz "KP(001348756): XYZ..." zu dem Endgerät EG1 übertragen und dort auf das Endgerät EG1 angewendet. In den Fällen, in denen der Nutzer N1 zum Beginn der Prozedur eine PIN in das Endgerät EG1 eingeben musste, kann diese PIN entweder mit der ersten Abfragenachricht zu dem Adress-Server AS oder - gebräuchlicher - mit der zweiten Abfragenachricht zu dem Konfigurierungs-Server KSA übermittelt werden, wobei jeweils die Fortsetzung des Verfahrens von der Richtigkeit der PIN abhängig gemacht werden kann.

Im vorliegenden Ausführungsbeispiel wurde nun das Endgerät EG1 mit grundlegenden Daten für eine erfolgreiche VoIP-Kommunikation ausgerüstet, also beispielsweise mit der Adressinformation eines geeigneten Gateways, eines SIP-Proxy-Servers o.a.. Auch ein Benutzername und eine Benutzerkennung zur Verwendung dieser zentralen Einrichtungen (Gateway, Proxy-Server) sind mit dem Verfahren aus dem Konfigurierungs-Server KSA abgerufen worden.

In einer alternativen Ausführungsform können von dem Adress-Server AS neben der URL des Konfigurierungs-Servers KSA auch weitere Informationen (Zusatzkonfigurierungsdaten) zu dem Endgerät EG1 übertragen und dort angewendet werden, beispielsweise eine länderspezifische Software-Variante oder länderspezifische Einstellungen für den Fall, in dem von dem Endgerät EG1 mit der Abfragenachricht "KS-REQ001?" eine Standortinformation gesendet wurde. Es ist auch denkbar, dass der Adress-Server AS anhand der Providerkennung oder anhand des kompletten Authentisierungscodes weitere Informationen oder Werbung bereitstellt und an das Endgerät EG1 zwecks Ausgabe (Darstellung) übermittelt.

In einem zweiten Ausführungsbeispiel gibt ein weiterer Nutzer N2 seinen (anderen) Authentisierungscode "0039467ABC" in sein neues Endgerät EG2 ein. Da die Vorgehensweise in diesem Ausführungsbeispiel dieselbe ist wie in dem vorhergehenden Ausführungsbeispiel, soll hier nur auf die Unterschiede hingewiesen werden. Wie aus der Figur ersichtlich, verwendet der Nutzer N2 einen Authentisierungscode eines anderen Providers "providerC.com", der auch einen separaten Konfigurierungs-Server KSC betreibt. Man sieht auch, dass abgesehen von den ersten drei Stellen des Authentisierungscodes, die in diesem Beispiel für die Providerkennung reserviert sind, jeder Provider vollkommen frei in der Entscheidung darüber ist, wie die restlichen Stellen des Authentisierungscodes zu gestalten sind (beispielsweise nur Ziffern oder gemischt Buchstaben und Zahlen, kryptische Angaben oder Klartext, etc.). Selbstverständlich können sich auch mehrere Provider einen oder mehrere gemeinsame Konfigurierungs-Server KSA, KSC teilen; umgekehrt kann auch ein einzelner Provider mehrere Konfigurierungs-Server KSA, KSC etc. vorsehen.

Die Endgeräte EG1, EG2 geben bei ihrer ersten Inbetriebnahme automatisch eine Eingabeaufforderung zur Eingabe eines Authentisierungscodes AC aus. Selbstverständlich kann die Ausgabe einer solche Eingabeaufforderung auch, beispielsweise durch eine Menüfunktion, manuell herbeigeführt werden, beispielsweise wenn ein gebrauchtes Endgerät EG1, EG2 erworben wird oder eine Neukonfigurierung eines solchen Gerätes erzwungen werden soll. In einem weiteren Ausführungsbeispiel überträgt jedes Endgerät EG1, EG2 mit der ersten Abfragenachricht auch seine Seriennummer (z.B. IMEI = International Mobile Equipment Identification) an den Adress-Server AS. Dadurch ist es möglich, gestohlende Endgeräte EG1, EG2 in der Datenbank des Adress-Server AS zu registrieren und bei einem späteren Konfigurierungs-Versuch durch eine entsprechende Antwortnachricht (Anweisung) oder Zusatzkonfigurierungsdaten für den weiteren Betrieb zu sperren.

## Patentansprüche

1. Verfahren zur Konfigurierung eines Endgerätes (EG1, EG2), wobei für die Konfigurierung nutzer- und/oder providerbezogene Konfigurationsdaten (xyz.., uvwxy...) in das Endgerät (EG1, EG2) eingegeben werden, wobei
- in einem ersten Schritt durch einen Nutzer (N1, N2) ein durch einen Provider (providerA, providerC) zur Verfugung gestellter Authentisierungscode (AC) in das Endgerät (EG1, EG2) eingegeben wird,
- in einem zweiten Schritt anhand zumindest eines dem Provider zugeordneten Teilbereiches des Authentisierungscodes (AC) eine Adresse (providerA.com, providerC. com) eines Konfigurierungs-Servers (KSA, KSC) des Providers (providerA, providerB) identifiziert wird,
- in einem dritten Schritt zumindest ein dem Nutzer (N1, N2) zugeordneter Teilbereich des Authentisierungcodes (AC) zu dem Konfigurierungs-Server (KSA, KSC) übertragen wird,
- in einem vierten Schritt durch den Konfigurierungs-Server (KSA, KSC) anhand der übertragenden Daten die Konfigurarionsdaten (xyz.., uvwxy...) bereitgestellt und zu dem Endgerät (EG1, EG2) übertragen werden, und
- in einem fünften Schritt das Endgerät (EG1, EG2) anhand dieser Konfigurations-Daten (xyz..., uvwxy...) konfiguriert wird, wobei in dem zweiten Schritt zur Identifizierung der Adresse (providerA.com, providerC.com) durch das Endgerät (EG1, EG2) der zumindest eine Teilbereich des Authentisierungscodes (AC) zu einem Adress-Server (AS) übertragen wird, wonach durch den Adress-Server (AS) die Adresse bereitgestellt und zu dem Endgerät (EG1, EG2) übertragen wird.

2. Verfahren nach Anspruch 1, **dadurch gekennzeichnet, dass** in dem Authentisierungscode (AC) für eine Identifizierung des Providers (providerA, providerB) dafür reservierte Stellen verwendet werden.

3. Verfahren nach einem der vorhergehenden Patentansprüche, **dadurch gekennzeichnet, dass** im ersten Schritt durch das Endgerät (EG1, EG2) mittels einer Benutzeroberfläche eine Eingabe-Aufforderung zur Eingabe des Authentisierungscodes (AC) ausgegeben wird.

4. Verfahren nach Patentanspruch 3, **dadurch gekennzeichnet, dass** die Eingabeaufforderung in den Fällen, in denen in dem Endgerät (EG1, EG2) noch keine Konfigurierungsdaten (xyz..., uvwxy...) vorliegen, automatisch ausgegeben wird.

5. Verfahren nach einem der vorhergehenden Patentansprüche, **dadurch gekennzeichnet, dass** als die Adresse (providerA.com, providerC.com) eine URL verwendet wird.

6. Verfahren nach einem der vorhergehenden Patentansprüche, **dadurch gekennzeichnet, dass** im zweiten Schritt durch den Adress-Server (AS) Zusatzkonfigurierungsdaten an das Endgerät (EG1, EG2) gesendet und zur weiteren Konfigurierung des Endgerätes (EG1, EG2) angewendet werden.

7. Verfahren nach Patentanspruch 6, **dadurch gekennzeichnet, dass** durch die Zusatzkonfigurierungsdaten (xyz..., uvwxy...) ein Firmware-Update, ein Zusatzprogramm und/oder Kundeninformationen zu dem Endgerät (EG1, EG2) übertragen werden.

8. Verfahren nach einem der vorhergehenden Patentansprüche, **dadurch gekennzeichnet, dass** durch das Endgerät (EG1, EG2) vor oder während des Abrufs der Konfigurationsdaten (xyz..., uvwxy...) eine Eingabeaufforderung zur Eingabe einer PIN oder eines Kennwortes ausgegeben wird, wobei diese PIN oder das Kennwort im dritten Schritt als ein Berechtigungsnachweis für den Abruf der Konfigurationsdaten (xyz.., uvwxy...) an den Konfigurierungs-Server (KSA, KSC) gesendet wird.

9. Verfahren nach einem der vorhergehenden Patentansprüche, **dadurch gekennzeichnet, dass** das Endgerät (EG1, EG2) in einem paketvermittelten Netzwerk betrieben wird.

10. Verfahren nach einem der vorhergehenden Patentansprüche, **dadurch gekennzeichnet, dass** zumindest ein Teil der Konfigurationsdaten (xyz..., uvw-xy...) zur Konfigurierung des Endgerätes (EG1, EG2) für eine Voice-Over-IP-Anordnung verwendet wird.

11. Endgerät für eine Kommunikationsanordnung in einem pakervermittelten Netzwerk, wobei das Endgerät (EG1, EG2) mit einer Speichereinrichtung zur Speicherung von Konfigurationsdaten (xyz..., uvwxy...) für die Durchführung von Kommunikationsverbindungen gemäß eines Kommunikationsprotokolls für paketvermittelte Netzwerke eingerichtet ist, **gekennzeichnet durch**
- eine Benutzeroberfläche zur Eingabe eines Authentisierungscodes (AC),
- eine Übermittlungseinrichtung zur Übertragung zumindest eines Teilbereiches des Authentisierungscodes (AC) zu einem Adress-Server (AS),
- eine Empfangseinrichtung zum Empfang einer Adresse (providerA.com, providerC.com) eines Konfigurierungs-Servers (KSA, KSC) von dem Adress-Server (AS),
- eine Übertragungseinrichtung zur Übertragung des Authentisierungscodes (AC) oder zumindest eines den Nutzer (N1, N2) identifizierenden Teilbereiches des Authentisierungscodes (AC) zu dem Konfigurations-Server (KSA, KSC),
- eine Empfangseinrichtung zum Empfang von **durch** den Konfigurierungs-Server (KSA, KSC) bereitgestellten Konfigurationsdaten (xyz..., uvwxy...). und
- eine Einrichtung zur Anwendung der Konfigurationsdaten (xyz..., uvwxy...) auf das Endgerät (EG1, EG2).

## Claims

1. Method for configuring a terminal (EG1, EG2), wherein user- and/or provider-related configuration data (xyz..., uvwxy...) are input into the terminal (EG1, EG2) for the configuration, wherein
- in a first step, an authentication code (AC) provided by a provider (providerA, providerC) is input into the terminal (EG1, EG2) by a user (N1, N2),
- in a second step, an address (providerA.com, providerC.com) of a configuration server (KSA, KSC) of the provider (providerA, providerB) is identified by means of at least one part-area, allocated to the provider, of the authentication code (AC),
- in a third step, at least one part-area, allocated to the user (N1, N2), of the authentication code (AC) is transmitted to the configuration server (KSA, KSC),
- in a fourth step, the configuration data (xyz..., uvwxy...) are provided by the configuration server (KSA, KSC) by means of the transmitted data and are transmitted to the terminal (EC1, EG2), and
- in a fifth step, the terminal (EG1, EG2) is configured by means of these configuration data (xyz..., uvwxy...), wherein the at least one part-area of the authentication code (AC) is transmitted to an address server (AS) in the second step for identifying the address (providerA.com, providerC.com) by the terminal (EG1, EG2), whereafter the address is provided by the address server (AS) and transmitted to the terminal (EG1, EG2).

2. Method according to Claim 1, **characterized in that** in the authentication code (AC) for an identification of the provider (providerA, providerB), places reserved therefor are used.

3. Method according to one of the preceding claims, **characterized in that** in the first step, an input request for inputting the authentication code (AC) is output by the terminal (EG1, EG2) by means of a user interface.

4. Method according to Claim 3, **characterized in that** the input request is output automatically in the cases in which no configuration data (xyz..., uvwxy...) are yet present in the terminal (EG1, EG2).

5. Method according to one of the preceding claims, **characterized in that** a URL is used as the address (providerA.com, providerC.com).

6. Method according to one of the preceding claims, **characterized in that** in the second step, additional configuration data are sent to the terminal (EG1, EG2) by the address server (AS) and are used for further configuration of the terminal (EG1, EG2).

7. Method according to Claim 6, **characterized in that** a firmware update, an additional program and/or customer information are transmitted to the terminal (EG1, EG2) by the additional configuration data (xyz..., uvwxy...).

8. Method according to one of the preceding claims, **characterized in that** an input request for inputting a PIN or a password is output before or during the call-up of the configuration data (xyz..., uvwxy...), wherein this PIN or the password is sent as proof of authorization for the call-up of the configuration data (xyz..., uvwxy...) to the configuration server (KSA, KSC) in the third step.

9. Method according to one of the preceding claims, **characterized in that** the terminal (EG1, EG2) is operated in a packet-switched network.

10. Method according to one of the preceding claims, **characterized in that** at least a part of the configuration data (xyz..., uvw-xy...) is used for configuring the terminal (EG1, EG2) for a Voice-over-IP arrangement.

11. Terminal for a communication arrangement in a packet-switched network, wherein the terminal (EG1, EG2) is configured with a storage device for storing configuration data (xyz..., uvwxy...) for carrying out communication links according to a communication protocol for packet-switched networks, **characterized by**
- a user interface for inputting an authentication code (AC),
- a transmitting device for transmitting at least a part-area of the authentication code (AC) to an address server (AS),
- a receiving device for receiving an address (providerA.com, providerC.com) of a configuration server (KSA, KSC) from the address server (AS),
- a transmission device for transmitting the authentication code (AC) or at least a part-area, identifying the user (N1, N2), of the authentication code (AC) to the configuration server (KSA, KSC),
- a receiving device for receiving configuration data (xyz..., uvwxy...) provided by the configuration server (KSA, KSC), and
- a device for applying the configuration data (xyz..., uvwxy...) to the terminal (EG1, EG2).

## Revendications

1. Procédé de configuration d'un terminal (EG1, EG2), selon lequel des données de configuration (xyz..., uvwxy...) se rapportant à l'utilisateur et/ou au fournisseur sont entrées dans le terminal (EG1, EG2) pour la configuration et selon lequel
- dans une première étape, un utilisateur (N1, N2) entre dans le terminal (EG1, EG2) un code d'authentification (AC) mis à disposition par un fournisseur (providerA, providerC),
- dans une deuxième étape, une adresse (providerA.com, providerC.com) d'un serveur de configuration (KSA, KSC) du fournisseur (providerA, providerC) est identifiée à l'aide d'au moins une partie, associée au fournisseur, du code d'authentification (AC),
- dans une troisième étape, au moins une partie, associée à l'utilisateur (N1, N2), du code d'authentification (AC) est transmise au serveur de configuration (KSA, KSC),
- dans une quatrième étape, à l'aide des données transmises, le serveur de configuration (KSA, KSC) met à disposition les données de configuration (xyz..., uvwxy...) et les transmet au terminal (EG1, EG2), et
- dans une cinquième étape, le terminal (EG1, EG2) est configuré à l'aide de ces données de configuration (xyz..., uvwxy...),
sachant que, dans la deuxième étape, pour l'identification de l'adresse (providerA.com, providerC.com), le terminal (EG1, EG2) transmet la ou les parties du code d'authentification (AC) à un serveur d'adresses (AS) puis le serveur d'adresses (AS) met à disposition l'adresse et la transmet au terminal (EG1, EG2).

2. Procédé selon la revendication 1, **caractérisé en ce que**, pour une identification du fournisseur (providerA, providerC), on utilise des positions réservées à cet effet dans le code d'authentification (AC).

3. Procédé selon l'une des revendications précédentes, **caractérisé en ce que**, dans la première étape, une demande d'entrée destinée à l'entrée du code d'authentification (AC) est présentée par le terminal (EG1, EG2) au moyen d'une interface d'utilisateur.

4. Procédé selon la revendication 3, **caractérisé en ce que** la demande d'entrée est présentée automatiquement dans les cas dans lesquels il n'existe encore aucune donnée de configuration (xyz..., uvwxy...) dans le terminal (EG1, EG2).

5. Procédé selon l'une des revendications précédentes, **caractérisé en ce qu'**une URL est utilisée comme adresse (providerA.com, providerC.com).

6. Procédé selon l'une des revendications précédentes, **caractérisé en ce que**, dans la deuxième étape, des données de configuration supplémentaires sont envoyées au terminal (EG1, EG2) par le serveur d'adresse (AS) et sont appliquées pour la suite de la configuration du terminal (EG1, EG2).

7. Procédé selon la revendication 6, **caractérisé en ce qu'**une mise à jour de microprogramme, un programme supplémentaire et/ou des informatisons sur le client sont transmis au terminal (EG1, EG2) par l'intermédiaire des données de configuration supplémentaires (xyz..., uvwxy...).

8. Procédé selon l'une des revendications précédentes, **caractérisé en ce que**, avant ou pendant l'appel des données de configuration (xyz..., uvwxy...), le terminal (EG1, EG2) présente une demande d'entrée en vue de l'entrée d'un PIN ou d'un mot de passe, ce PIN ou le mot de passe étant envoyé au serveur de configuration (KSA, KSC) dans la troisième étape comme preuve d'autorisation pour l'appel des données de configuration (xyz..., uvwxy...).

9. Procédé selon l'une des revendications précédentes, **caractérisé en ce que** le terminal (EG1, EG2) fonctionne dans un réseau à commutation de paquets.

10. Procédé selon l'une des revendications précédentes, **caractérisé en ce que** la ou les parties des données de configuration (xyz..., uvwxy...) sont utilisées pour la configuration du terminal (EG1, EG2) pour un dispositif Voix-sur-IP.

11. Terminal pour un dispositif de communication dans un réseau à commutation de paquets, le terminal (EG1, EG2) étant équipé d'un dispositif de mémorisation pour mémoriser des données de configuration (xyz..., uvwxy...) en vue de la mise en oeuvre de liaisons de communication selon un protocole de communication pour des réseaux à commutation de paquets, **caractérisé par** :
- une interface d'utilisateur pour l'entrée d'un code d'authentification (AC),
- un dispositif de transmission pour la transmission d'au moins une partie du code d'authentification (AC) à un serveur d'adresses (AS),
- un dispositif de réception pour la réception d'une adresse (providerA.com, providerC.com) d'un serveur de configuration (KSA, KSC) en provenance du serveur d'adresses (AS),
- un dispositif de transmission pour la transmission du code d'authentification (AC) ou d'au moins une partie, identifiant l'utilisateur (N1, N2), du code d'authentification (AC) au serveur de configuration (KSA, KSC),
- un dispositif de réception pour la réception de données de configuration (xyz..., uvwxy...) mises à disposition par le serveur de configuration (KSA, KSC), et
- un dispositif pour l'application des données de configuration (xyz..., uvwxy...) au terminal (EG1, EG2).
